# EUROPÄISCHE PATENTSCHRIFT

(11) **EP 4 406 419 B1**
(45) Veröffentlichungstag und Bekanntmachung des Hinweises auf die Patenterteilung: **15.04.2026**
(21) Anmeldenummer: 24153886.7
(22) Anmeldetag: 25.01.2024
(51) Int. Cl.: A23J 3/14, A23J 3/22, A23L 29/212, A23L 29/238, A23L 29/256, A23L 29/262, A23L 29/269

(54) **VEGANES FLEISCHERSATZPRODUKT UND VERFAHREN ZU DESSEN HERSTELLUNG**
VEGAN MEAT SUBSTITUTE PRODUCT AND METHOD FOR THE PRODUCTION THEREOF
PRODUIT DE SUBSTITUTION DE LA VIANDE VÉGANE ET SON PROCÉDÉ DE PRÉPARATION

(30) Priorität: 26.01.2023 DE 102023101942
(43) Veröffentlichungstag der Anmeldung: 31.07.2024
(73) Patentinhaber: Bode, Lars, 31167 Bockenem (DE)
(72) Erfinder: Bode, Lars, 31167 Bockenem (DE)
(74) Vertreter: Sandvoß, Stefanie

(56) Entgegenhaltungen:
- EP-A2- 1 493 337
- WO-A1-2021/110760
- WO-A1-2022/086422
- DE-A1- 102016 110 653
- ALBERT HANDTMANN: "Whitepaper Fleischersatzprodukte Teil 3-Vegane Wurst", INTERNET CITATION, 19 November 2021 (2021-11-19), XP009552111, Retrieved from the Internet <URL:https://www.handtmann.de/fileadmin/user_upload/Geschaeftsbereiche/Fuell-_und_Portioniersysteme/3._Aktuelles/Whitepaper_Modul/2021_Handtmann_Whitepaper_Vegane_Wurstprodukte_17-11-2021.pdf> [retrieved on 20230816]

## Beschreibung

Die vorliegende Erfindung betrifft ein Fleischersatzprodukt, insbesondere ein veganes Wurst- oder Fleischkäseprodukt, sowie ein Verfahren zu dessen Herstellung.

Viele Menschen konsumieren sehr gerne Fleisch- und Wurstwaren, die folglich auch bei vielen Menschen sehr viel öfter als die von Ärzten empfohlenen zwei bis drei Mal pro Woche auf dem Speiseplan stehen. Dass der übermäßige Genuss von Fleisch- und Wurstprodukten nicht förderlich für die Gesundheit ist, ist bereits seit langer Zeit bekannt. Dennoch fällt der Verzicht auf fleischhaltige Produkte vielen Menschen sehr schwer, weshalb sie trotz besseren Wissens täglich oder zumindest nahezu täglich fleischhaltige Produkte konsumieren.

Andere Menschen verzichten vollständig auf den Verzehr fleischhaltiger Produkte, sei es aus gesundheitlichen Gründen, aus ethischen Gründen oder anderen Gründen. Sowohl unter den Menschen, die fleischhaltige Produkte konsumieren, als auch unter den Menschen, die auf diese verzichten, gibt es einen großen Anteil an Personen, die zumindest gelegentlich auf Fleischersatzprodukte zurückgreifen, um den Genuss an tatsächlichem Fleisch zu reduzieren oder um dauerhaft auf diesen zu verzichten, ohne auf den Fleischgeschmack verzichten zu müssen.

Aus dem Stand der Technik sind bereits zahlreiche Fleischersatzprodukte bekannt, insbesondere auf Sojabasis oder auf Erbsenproteinbasis. So findet man beispielsweise vegane Würstchen, vegane Currywurst, vegane Mettbällchen, vegane Frikadellen, vegane Schnitzel, vegane Hähnchenimitatprodukte und veganen Fleischsalat in jedem gut sortierten Supermarkt.

Diese aus dem Stand der Technik bekannten Fleischersatzprodukte haben jedoch insbesondere den Nachteil, dass die Konsistenz der Fleischersatzprodukte anders ist als bei den fleischhaltigen Produkten, welche sie imitieren sollen. Insbesondere ist die Konsistenz oftmals weicher, was beim Verzehr von vielen Konsumenten als befremdlich empfunden wird. In Kombination mit einem Geschmack, der ebenfalls anders ist als bei den fleischhaltigen Produkten, wird die Qualität der aus dem Stand der Technik bekannten Fleischersatzprodukte von vielen Konsumenten als nicht zufriedenstellend beurteilt und das Geschmackserlebnis als enttäuschend empfunden.

Von der Albert Handtmann Maschinenfabrik GmbH & Co. KG wird in dem "Whitepaper Fleischersatzprodukte Teil 3 - Vegane Wurst", im Internet abrufbar unter "https://www.handtmann.de/fileadmin/user_upload/GeschaeftsBereiche/Fuell-_und_Portio-niersysteme/3._Aktuelles/Whitepaper_Modul/2021_Handtmann_Whitepaper_Vegane_Wurst produkte_17-11-2021.pdf" allgemein die Herstellung veganer Wurstprodukte beschrieben.

Die DE 10 2016 110 653 A1 beschreibt die Herstellung einer Nahrungsmittelzubereitung, die Teile von Tieren sowie Pilzmyzelien enthält sowie auch die Herstellung einer veganen Bratwurst. Dazu wird eine erste Emulsion, die u.a. Methylcellulose, Rapsöl und Eiswasser enthält, mit einer zweiten Emulsion, die u.a. Eiswasser, Rapsöl und Erbsenstärke enthält, vereinigt und nach Zugabe von u.a. Erbsenproteinisolat im Thermomix emulgiert. Dass eine Temperaturkontrolle während der Herstellung der vorgenannten Emulsionen wichtig sei, wird nicht beschrieben.

Die EP 1 493 337 A2 beschreibt Fleischersatzprodukte, für deren Herstellung zunächst Methylcellulose und Eiswasser gemischt werden, anschließend pflanzliches Protein zugegeben und Pflanzenöl sowie Stärke als Verdickungsmittel und Geschmacksstoffe zugefügt werden. Bezüglich des Gehalts an Eiswasser wird offenbart, dass verschiedene Gehalte gewählt werden können, solange die Temperatur während des Herstellungsprozesses unterhalb des Punkts gehalten wird, an dem die Mischung erhärtet, d.h. die Methylcellulose geliert. Abgesehen davon, dass die Temperatur während des Herstellungsprozesses so gewählt sein sollte, dass die Methylcellulose nicht geliert, werden keine Temperaturbereiche offenbart, in denen gearbeitet werden sollte.

Die WO 2021/110760 A1 beschreibt eine pflanzenbasierte Zusammensetzung ohne Eiweiß für die Herstellung von veganen Wurstprodukten.

Die WO 2022/086422 A1 beschreibt Verfahren zur Herstellung einer Fleischersatzmasse, insbesondere für die Herstellung fleischloser Burgerpatties. In dem Verfahren wird eine pflanzenproteinhaltige Zusammensetzung mit einer strukturierten Öl-in-Wasser-Emulsion gemischt.

Es besteht trotz aller bereits auf dem Markt zu findenden veganen Fleischersatzprodukte ein Bedarf an einem Fleischersatzprodukt, das sowohl hinsichtlich der Konsistenz als auch hinsichtlich des Geschmacks einem fleischhaltigen Produkt möglichst nahekommt und beim Verzehr ein angenehmes Mundgefühl hervorruft.

### Aufgabe der Erfindung

Es ist die Aufgabe der vorliegenden Erfindung, ein Verfahren zur Herstellung eines alternativen Fleischersatzprodukts bereitzustellen, das die o.g. aus dem Stand der Technik bekannten Nachteile vermeidet und sich insbesondere durch eine verbesserte Konsistenz, die einem fleischhaltigen Produkt ähnelt, sowie durch einen verbesserten Geschmack und ein verbessertes Mundgefühl auszeichnet.

### Allgemeine Beschreibung der Erfindung

Die Erfindung löst diese Aufgabe mit den Merkmalen der Ansprüche durch Bereitstellung eines Verfahrens zur Herstellung eines Fleischersatzproduktes, wie in Anspruch 1 definiert.

Erfindungsgemäß beträgt die Temperatur der ersten Zusammensetzung während des Homogenisierens 0,0°C - 0,5°C, und die Temperatur der zweiten Zusammensetzung während des Homogenisierens beträgt -2,0°C - 0,0°C.

Unter einer halbfesten Zusammensetzung wird für die Zwecke der vorliegenden Erfindung eine Zusammensetzung mit gallertartiger Konsistenz bzw. eine Zusammensetzung verstanden, deren Aggregatzustand zwischen fest und flüssig liegt.

Die Herstellung einer nicht veganen, also fleischbasierten, Bockwurst, Currywurst oder Brühwurst ist im Vergleich zu einer pflanzenbasierten Bockwurst, Currywurst oder Brühwurst recht einfach, da bei der Herstellung der fleischbasierten Würste in einem deutlich größeren Temperaturbereich gearbeitet werden kann. So hat es beispielsweise keinen Einfluss auf den Geschmack des Endproduktes, wenn die Fleischmasse zur Herstellung der Würste bei +4,0 °C oder bei +14°C hergestellt und homogenisiert wird.

Im Stand der Technik wird das Herstellungsverfahren veganer Fleischersatzprodukte häufig völlig analog zu den jeweiligen Herstellungsverfahren der fleischbasierten Produkte durchgeführt, d.h. es wird auch im gleichen (vergleichsweise breiten) Temperaturbereich gearbeitet.

Es wurde nun im Rahmen der vorliegenden Erfindung festgestellt, dass bei einer reinen Übertragung der Verfahrensparameter von einem Herstellungsverfahren fleischbasierter Produkte auf ein Herstellungsverfahren der jeweiligen Fleischersatzprodukte Produkte mit nicht zufriedenstellenden Eigenschaften erzielt werden, insbesondere mit einer zu weichen Konsistenz, die beim Verzehr ein unangenehmes Mundgefühl erzeugen. In einer Reihe von Experimenten wurde weiterhin gefunden, dass die Temperatur während der verschiedenen Schritte des Herstellungsverfahrens der Fleischersatzprodukte einen kritischen Einfluss auf deren Qualität hat. Die Temperatur der Inhaltsstoffe bzw. Zusammensetzungen in den verschiedenen Schritten des Herstellungsverfahrens darf sich dabei nur in jeweils sehr engen, definierten Bereichen bewegen. So wurde gefunden, dass die Temperatur der halbfesten oder festen ersten Zusammensetzung, die Methylcellulose, Pflanzenöl und Eiswasser enthält, während des Homogenisierens bei 0,0°C - 0,5°C liegen muss und die Temperatur der halbfesten oder festen zweiten Zusammensetzung, die Erbsenproteinisolat, Pflanzenöl und Eiswasser enthält, während des Homogenisierens bei -2,0°C - 0,0°C liegen muss. Nur wenn diese Temperaturvorgaben während der Herstellung beachtet und strikt eingehalten werden, kann ein erfindungsgemäßes Fleischersatzprodukt erzeugt werden, das eine fleischähnliche Konsistenz aufweist und beim Verzehr ein angenehmes Mundgefühl erzeugt. Bereits ein einmaliges Über- oder Unterschreiten der vorgenannten Temperaturbereiche führt hingegen zu Produkten mit ungleich schlechteren Eigenschaften. Für die Zwecke der vorliegenden Erfindung wird unter der Bezeichnung "Eiswasser" eine Mischung aus Eis und Wasser verstanden. Diese müssen jedoch vor ihrer Zugabe nicht notwendigerweise in Mischung vorliegen und gemeinsam zugegeben werden, sondern sie können auch getrennt voneinander zugegeben werden. Die erste Zusammensetzung kann daher z.B. durch Vermischen und Homogenisieren von Methylcellulose, Pflanzenöl, Eis und Wasser hergestellt werden, wobei das Eis und das Wasser optional getrennt voneinander zugegeben werden können. Vorzugsweise beträgt der Anteil von Eis an dem Eiswasser mindestens 50 Gew.-%, vorzugsweise 50-60 Gew.-%, besonders bevorzugt 50-55 Gew.-%. Durch die Bewegung der jeweiligen Zusammensetzungen im Kutter erhöht sich deren Temperatur, und zwar mit zunehmender Drehzahl umso schneller. Über die zugegebene Menge an Eiswasser bzw. an Eis und Wasser lässt sich die Temperatur der ersten Zusammensetzung sowie der zweiten Zusammensetzung steuern.

In einer bevorzugten Ausführungsform erfolgt das Homogenisieren der Inhaltsstoffe zum Erhalt der ersten Zusammensetzung in einem Kutter mit einem bevorzugten Fassungsvermögen von 80-120 L, insbesondere von 90-110 L, und noch bevorzugter von 95-105 L, bei 2.500-3.000 U/min, während das Homogenisieren der Inhaltsstoffe zum Erhalt der zweiten Zusammensetzung in einem Kutter mit vorzugsweise gleichem Fassungsvermögen bei insbesondere 2.300-2.700 U/min, erfolgt. Bei dem vorgenannten Fassungsvermögen des Kutters beträgt die Schneidlänge der Messer vorzugsweise 25-30 cm.

Der für diese Ausführungsform verwendete Kutter ist insbesondere ein Seydelmann Kutter vom Typ K 96 H.

Sofern in der vorliegenden Offenbarung Umdrehungszahlen des Kutters genannt werden, beziehen sich diese vorzugsweise ebenfalls auf einen Kutter mit einem bevorzugten Fassungsvermögen von 80-120 L, insbesondere von 90-110 L, und noch bevorzugter von 95-105 L, und mit einer Schneidlänge der Messer von vorzugsweise 25-30 cm.

Grundsätzlich kann die Homogenisierung der Inhaltsstoffe zum Erhalt beider Zusammensetzungen jedoch auch in beliebigen anderen Kuttern erfolgen. Wird in Kuttern mit größerem Fassungsvermögen und dementsprechend längeren Messern gearbeitet, kann das Homogenisieren bei geringeren Umdrehungszahlen erfolgen, da die Messer aufgrund der größeren Länge eine höhere Schnittleistung in m/s erlauben. Wird hingegen in Kuttern mit kleinerem Fassungsvermögen und dementsprechend kürzeren Messern gearbeitet, sollte das Homogenisieren bei höheren Umdrehungszahlen erfolgen.

Die erste Zusammensetzung enthält erfindungsgemäß 8-12 Gew.-% Pflanzenöl, 3-7 Gew.-% Methylcellulose und 80-87 Gew.-% Eiswasser.

Besonders bevorzugt beträgt der Anteil an Pflanzenöl an der ersten Zusammensetzung 9-11 Gew.-%.

Besonders bevorzugt beträgt der Anteil an Methylcellulose an der ersten Zusammensetzung 5-7 Gew.-%.

Besonders bevorzugt beträgt der Anteil an Eiswasser an der ersten Zusammensetzung 84-86 Gew.-%.

Das zur Herstellung der ersten Zusammensetzung eingesetzte Pflanzenöl ist vorzugsweise aus der Gruppe ausgewählt, die aus Sonnenblumenöl, Rapsöl, Sojaöl, Traubenkernöl, Olivenöl, Maisöl, Leinöl und Distelöl besteht.

Das Pflanzenöl wird vorzugsweise in dem Kutter vorgelegt und die Methylcellulose wird zu diesem hinzugefügt. Der Kutter wird dann vorzugsweise bei einer Drehzahl von 2.500-3.000 U/min betrieben. Anschließend wird das Eiswasser hinzugefügt, wobei über die Zugabe des Eiswassers (bzw. über die Zugabe von Eis und von Wasser) die Temperatur der zu homogenisierenden Masse, die die erste Zusammensetzung bilden wird, so gesteuert wird, dass diese bei 0,0°C - 0,5°C liegt. Vor der Entnahme der ersten Zusammensetzung aus dem Kutter ist darauf zu achten, dass sich das Eis komplett gelöst hat.

Die zweite Zusammensetzung enthält erfindungsgemäß 5-15 Gew.-% Erbsenproteinisolat, 30-40 Gew.-% Pflanzenöl und 50-60 Gew.-% Eiswasser.

Besonders bevorzugt beträgt der Anteil an Erbsenproteinisolat an der zweiten Zusammensetzung 8-12 Gew.-%.

Besonders bevorzugt beträgt der Anteil an Pflanzenöl an der zweiten Zusammensetzung 33-37 Gew.-%.

Besonders bevorzugt beträgt der Anteil an Eiswasser an der zweiten Zusammensetzung 53-57 Gew.-%.

Das zur Herstellung der zweiten Zusammensetzung eingesetzte Pflanzenöl ist vorzugsweise aus der Gruppe ausgewählt, die aus Sonnenblumenöl, Rapsöl, Sojaöl, Traubenkernöl, Olivenöl, Maisöl, Leinöl und Distelöl besteht. Optional ist das Pflanzenöl, das zur Herstellung der zweiten Zusammensetzung eingesetzt wird, das gleiche Pflanzenöl wie das, das zur Herstellung der ersten Zusammensetzung eingesetzt wird und ist insbesondere Sonnenblumenöl oder Rapsöl.

Zur Herstellung der zweiten Zusammensetzung wird bevorzugt Eiswasser oder Eis in dem Kutter vorgelegt und Erbsenproteinisolat zugefügt. Wenn sich das Erbsenproteinisolat vollständig gelöst hat, wird optional Wasser (falls anfangs nur Eis vorgelegt wurde) und anschließend das Pflanzenöl hinzugegeben und die Zusammensetzung wird vorzugsweise bei einer Drehzahl von 2.100-3.000 U/min homogenisiert. Während der Herstellung der zweiten Zusammensetzung beträgt die Temperatur der zu homogenisierenden Masse, die die zweite Zusammensetzung bilden wird, zu keinem Zeitpunkt mehr als 0 °C. Vorzugsweise liegt die Temperatur während der Homogenisierung dauerhaft unterhalb von 0 °C.

Sowohl die erste Zusammensetzung als auch die zweite Zusammensetzung werden nach ihrer Herstellung bevorzugt kühl gelagert, insbesondere bei einer Temperatur zwischen 0°C und 1°C.

Die erste Methylcellulose enthaltende Zusammensetzung und die zweite Erbsenproteinisolat enthaltende Zusammensetzung bilden die Grundlage für die Herstellung verschiedener Fleischersatzprodukte wie Currywurst, Brühwurst, Bockwurst und Leberkäse. Je nach Art des gewünschten Fleischersatzproduktes können die weiteren Inhaltsstoffe, insbesondere die Geschmacksstoffe, variieren. Die Art der Verarbeitung der ersten und der zweiten Zusammensetzung zu den jeweiligen erfindungsgemäßen Fleischersatzprodukten ist jedoch identisch und wird im nachfolgenden beschrieben.

In dem erfindungsgemäßen Verfahren zur Herstellung eines Fleischersatzproduktes werden die erste Zusammensetzung und die zweite Zusammensetzung in eine wasserbasierte Lösung eingebracht, die neben Wasser auch Verdickungsmittel und Geschmacksstoffe enthält. Vorzugsweise ist das Verdickungsmittel dabei aus der Gruppe ausgewählt, die Johannisbrotkernmehl, Xanthan, Konjakgummi, Carrageen, Guarkernmehl, Agar-Agar, Stärke, Reismehl und Mischungen dieser enthält.

Bevorzugt enthält die wasserbasierte Lösung Salz sowie weitere Gewürze bzw. Geschmacksstoffe. Die wasserbasierte Lösung wird hergestellt, indem zunächst Verdickungsmittel in Wasser gelöst wird, vorzugsweise unter Rotation im Kutter, wobei die Viskosität der Lösung stark ansteigt. Die Gewürze bzw. Geschmacksstoffe können an beliebiger Stelle zugefügt werden und werden beispielsweise zusammen mit dem Verdickungsmittel zu dem Wasser gegeben.

Erfindungsgemäß wird die wasserbasierte Lösung, in die die erste und die zweite Zusammensetzung eingebracht werden, hergestellt, indem Wasser vorgelegt wird und das Verdickungsmittel und optionale weitere Inhaltsstoffe mit einer bevorzugten Temperatur von - 9,0 bis -7,0°C zugeführt werden und homogenisiert wird, wobei sich eine wasserbasierte Lösung bildet.

Dann wird zuerst die zweite, Erbsenproteinisolat enthaltende Zusammensetzung und anschließend die erste, Methylcellulose enthaltende Zusammensetzung in die wasserbasierte Lösung eingebracht, wobei nach dem Einbringen jeder der beiden Zusammensetzungen im Kutter bei 2.100-3.000 U/min homogenisiert wird. Diese hohen Drehzahlen sind ein weiterer Unterschied zur Herstellung, wie sie im Stand der Technik durchgeführt wird, denn dort wird bei Drehzahlen von ca. 1.000-1.500 U/min gekuttert. Es wurde jedoch gefunden, dass es bei deutlich höheren Drehzahlen von 2.100-3.000 U/min zu signifikant weniger Lufteinschlüssen in dem Produkt kommt. Durch das Homogenisieren nach dem Einbringen der ersten Zusammensetzung wird die Fleischersatzmasse erhalten.

Der Anteil der in die wasserbasierte Lösung eingebrachten ersten Zusammensetzung beträgt 27,0-33,0 Gew.-%, bezogen auf das Gesamtgewicht der Fleischersatzmasse, und der Anteil der in die wasserbasierte Lösung eingebrachten zweiten Zusammensetzung beträgt 37,0-43,0 Gew.-%, bezogen auf das Gesamtgewicht der Fleischersatzmasse. Der Anteil der wasserbasierten Lösung an der Fleischersatzmasse beträgt vorzugsweise 28,0-32,0 Gew.-%, bezogen auf das Gesamtgewicht der Fleischersatzmasse.

In einer bevorzugten Ausführungsform wird die in Schritt c) des erfindungsgemäßen Verfahrens erhaltene Fleischersatzmasse dem Kutter bei einer Temperatur unterhalb von 0°C entnommen und in einen Darm eingebracht. Der Darm ist dabei ein Kunstdarm und optional ein cellulosehaltiger Kunstdarm oder ein cellulosefreier Kunstdarm, insbesondere auf Basis von Polyamid. Es wurde gefunden, dass ein cellulosefreier Kunstdarm insofern vorteilhaft ist, als dass er leichter wieder von dem Fleischersatzprodukt entfernt werden kann, da die in einem cellulosehaltigen Kunstdarm enthaltene Cellulose sich mit der in der Fleischersatzmasse enthaltenen Methylcellulose verbindet. Beim Herausschälen der Fleischersatzprodukte aus dem cellulosehaltigen Kunstdarm bleiben daher häufig Rückstände des Fleischersatzproduktes an diesem haften.

Unabhängig davon, ob die Fleischersatzmasse in dem erfindungsgemäßen Verfahren in einen cellulosehaltigen Kunstdarm oder einen cellulosefreien Kunstdarm eingebracht wird, wird die sich in dem Darm befindliche Fleischersatzmasse anschließend mittels heißen Wasserdampfs erhitzt. Der heiße Wasserdampf weist dabei vorzugsweise eine Temperatur im Bereich von 85-90 °C auf.

Vorzugsweise erfolgt das Erhitzen der Fleischersatzmasse durch heißen Wasserdampf in mehreren Schritten, die vorzugsweise auch einen Räucherschritt enthalten. Dabei wird die Fleischersatzmasse im ersten Schritt vorzugsweise auf eine Kammertemperatur (Temperatur in der Heizkammer einer mit Wasserdampf arbeitenden Heizvorrichtung) von ca. 85-90°C erhitzt und für ca. 15-30 Minuten bei dieser Temperatur gehalten. Anschließend wird ebenfalls bei dieser Temperatur für ca. 30-45 Minuten geräuchert, bevor danach noch einmal für ca. 50-60 Minuten ebenfalls bei dieser Temperatur im heißen Wasserdampf gegart wird.

Anschließend wird das auf diese Weise erhaltene Fleischersatzprodukt vorzugsweise aus dem Darm entnommen und optional (insbesondere im Fall von Leberkäse-Imitat) geschnitten bzw. portioniert.

Weiterhin wird ein durch das vorbeschriebene erfindungsgemäße Verfahren erhältliches Fleischersatzprodukt, insbesondere eine vegane Currywurst, Brühwurst, Bockwurst oder einen veganen Leberkäse offengelegt.

### Genaue Beschreibung der Erfindung

Die Erfindung wird nun genauer anhand eines Ausführungsbeispiels beschrieben.

### Beispiel 1: Vergleich eines erfindungsgemäß hergestellten Fleischersatzprodukts mit auf andere Weise hergestellten Fleischersatzprodukten

Um die Qualität erfindungsgemäß hergestellter Fleischersatzprodukte mit der Qualität von anderen Fleischersatzprodukten vergleichen zu können, wird eine vegane Currywurst nach dem erfindungsgemäßen Verfahren hergestellt. Dazu wird zunächst eine erste Zusammensetzung hergestellt, die 3-7 Gew.-% Methylcellulose, 8-12 Gew.-% Sonnenblumenenöl und 80-87 Gew.-% Eiswasser enthält. Die Inhaltsstoffe werden im Kutter bei einer Drehzahl von 2.500-3.000 U/min zu einer festen, weißen Zusammensetzung homogenisiert. Dabei wird die Temperatur konstant unter 0,5 °C gehalten.

Des Weiteren wird eine zweite Zusammensetzung hergestellt, die 5-15 Gew.-% Erbsenproteinisolat, 30-40 Gew.-% Sonnenblumenenöl und 50-60 Gew.-% Eiswasser enthält. Die Inhaltsstoffe werden im Kutter bei einer Drehzahl von 2.300-2.700 U/min zu einer festen Zusammensetzung homogenisiert. Dabei wird die Temperatur konstant unter 0,0 °C gehalten.

Zur Herstellung der wasserbasierten Lösung, in die die erste und die zweite Zusammensetzung eingebracht werden, wird zunächst Wasser vorgelegt. In dieses werden Konjakgummi, Carrageen, Bratzwiebel-Geschmacksstoff, Curry, Salz und weitere Gewürze eingebracht und es wird bei einer Temperatur im Bereich von -6°C bis -7°C homogenisiert bildet.

In die auf diese Weise erhaltene wasserbasierte Lösung wird zuerst die zweite, Erbsenproteinisolat enthaltende Zusammensetzung und anschließend die erste, Methylcellulose enthaltende Zusammensetzung eingebracht, wobei nach dem Einbringen jeder der beiden Zusammensetzungen im Kutter bei 2.100-3.000 U/min homogenisiert und durch das Homogenisieren nach dem Einbringen der ersten Zusammensetzung in die wasserbasierte Lösung die Fleischersatzmasse erhalten wird.

Der Anteil der in die wasserbasierte Lösung eingebrachten ersten Zusammensetzung betrug etwa 30 Gew.-%, der Anteil der in die wasserbasierte Lösung eingebrachten zweiten Zusammensetzung betrug etwa 40,0 Gew.-%, und der Anteil der wasserbasierten Lösung an der Fleischersatzmasse betrug etwa 30 Gew.-%, jeweils bezogen auf das Gesamtgewicht der Fleischersatzmasse.

Die Fleischersatzmasse wird dem Kutter bei einer Temperatur von ca. -0,5°C entnommen und in einen Darm eingebracht. In diesem wird sie anschließend mittels heißen Wasserdampfs mit einer Temperatur von ca. 86-87 °C in einer mit Wasserdampf betriebenen Heizvorrichtung erhitzt. Nach Erreichen einer Kammertemperatur von 86-87 °C wird diese für ca. 20 Minuten bei der Temperatur gehalten. Anschließend wird für ca. 35 Minuten geräuchert und im Anschluss daran nochmals für ca. 1 Stunde gegart, jeweils bei der o.g. Temperatur von 86-87 °C.

Das auf diese Weise erhaltene Fleischersatzprodukt in Form einer veganen Currywurst wird abkühlen gelassen und aus dem Darm entnommen.

Um den Einfluss der Temperatur bei der Herstellung der ersten und der zweiten Zusammensetzung zu testen, werden in einem zweiten (nicht erfindungsgemäßen) und in einem dritten (nicht erfindungsgemäßen) Herstellungsverfahren ebenfalls vegane Currywürste hergestellt. Diese wurden in jedem Schritt auf exakt die gleiche Weise hergestellt wie die im ersten Teil des Beispiels beschriebene nach erfindungsgemäßem Verfahren hergestellte vegane Currywurst, mit der Ausnahme, dass bei dem zweiten (nicht erfindungsgemäßen) Herstellungsverfahren zur Herstellung der ersten Zusammensetzung die Temperatur auf ca. 3 °C steigen gelassen wurde, und bei dem dritten (nicht erfindungsgemäßen) Herstellungsverfahren zur Herstellung der zweiten Zusammensetzung die Temperatur auf ca. 2 °C steigen gelassen wurde. Die Currywurst, bei der die Temperatur während der Herstellung der ersten Zusammensetzung auf ca. 3 °C steigen gelassen wurde, wird als Vergleichs-Currywurst A bezeichnet. Die Currywurst, bei der die Temperatur während der Herstellung der zweiten Zusammensetzung auf ca. 2 °C steigen gelassen wurde, wird als Vergleichs-Currywurst B bezeichnet.

Zusätzlich zu den vorgenannten Fleischersatzprodukten wurde eine weitere aus dem Stand der Technik bekannte und im Supermarkt erhältliche vegane Currywurst auf Erbsenproteinbasis (Vergleichs-Currywurst C) erworben.

Die vorgenannten 4 veganen Currywürste wurden anschließend von Testpersonen getestet und bewertet. Die Ergebnisse der sensorischen Untersuchung, die im objektivierten Blindtest mit 30 Testpersonen durchgeführt wurde, sind in der nachstehenden Tabelle 1 zusammengefasst:

**Tab. 1: Ergebnisse des Sensoriktests**

| Kriterium | Erfindungsgemäße Currywurst | Vergleichs-Currywurst A | Vergleichs-Currywurst B | Vergleichs-Currywurst C |
|---|---|---|---|---|
| Gesamtgefallen | 9,9 | 4,9 | 4,5 | 2,2 |
| Geschmack | 10,0 | 8,2 | 8,1 | 3,1 |
| Konsistenz/Bissfestigkeit | 9,9 | 3,0 | 2,8 | 1,1 |
| Aussehen/Optik | 9,8 | 6,3 | 6,3 | 4,0 |

| | | | | |
|---|---|---|---|---|
| MW = Mittelwert der Beurteilung auf einer Skala von 1 bis 10, 1 = schlechteste Bewertung, 10= beste Bewertung | | | | |

Als Ergebnis des Sensoriktests kann festgehalten werden, dass die durch ein erfindungsgemäßes Verfahren hergestellte vegane Currywurst von den 30 Testpersonen in allen Kategorien signifikant besser bewertet wurde als die drei nicht erfindungsgemäßen Vergleichs-Currywürste A, B und C.

Insbesondere das Kriterium der Konsistenz/Bissfestigkeit wurde von den Testpersonen bei allen Vergleichs-Currywürsten A, B und C mit vergleichsweise sehr schlechten Ergebnissen beurteilt, während die Konsistenz/Bissfertigkeit der erfindungsgemäß hergestellten Currywurst als einziges Fleischersatzprodukt gute Bewertungen erzielte. Von den Testpersonen wurde auf Nachfrage mitgeteilt, dass die Konsistenz/Bissfestigkeit der erfindungsgemäß hergestellten Currywurst überwiegend als einer fleischhaltigen Currywurst äußerst ähnlich empfunden wurde, während mehrere Testpersonen angaben, die Konsistenz der käuflich erworbenen Vergleichs-Currywurst C war krümelig, was von den Testpersonen als befremdlich empfunden wurde. Auch die Vergleichs-Currywürste A und B, die sich in der Herstellung nur durch die abweichende Temperatur bei der Herstellung der ersten und zweiten Zusammensetzungen von der erfindungsgemäßen Herstellung unterschieden, wurden von den Testpersonen deutlich schlechter bewertet als die nach einem erfindungsgemäßen Verfahren hergestellte Currywurst. Zu diesen Vergleichs-Currywürsten A und B teilten die Testpersonen mit, dass der Geschmack zwar recht gut sei, die Konsistenz allerdings viel zu schwammig war und am ehesten mit der Konsistenz von Eierstich verglichen werden könne, was ein unangenehmes Mundgefühl hinterließe. Optisch wurden beide Vergleichs-Currywürste A und B von außen als ähnlich gut wie die erfindungsgemäß hergestellte Currywurst empfunden, allerdings gaben die Testpersonen an, dass beim Anschneiden der Wurst Lufteinschlüsse sichtbar waren und die Schnittflächen daher schwammartig aussahen. Dies führte zu einer schlechteren Gesamtbewertung der Optik.

Die Ergebnisse des Sensoriktests verdeutlichen, dass die Einhaltung des erfindungsgemäßen engen Temperaturbereichs während der Herstellung der ersten und der zweiten Zusammensetzung essenziell für die Qualität des resultierenden Fleischersatzproduktes ist.

Die in der vorstehenden Beschreibung, in dem Beispiel sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zur Herstellung eines Fleischersatzproduktes, umfassend die folgenden Schritte:
a) Herstellen einer halbfesten oder festen ersten Zusammensetzung durch Vermischen und Homogenisieren von 3-7 Gew.-% Methylcellulose, 8-12 Gew.-% Pflanzenöl und 80-87 Gew.-% Eiswasser sowie optionaler weiterer Inhaltsstoffe;
b) Herstellen einer halbfesten oder festen zweiten Zusammensetzung durch Vermischen und Homogenisieren von 5-15 Gew.-% Erbsenproteinisolat, 30-40 Gew.- % Pflanzenöl und 50-60 Gew.-% Eiswasser sowie optionaler weiterer Inhaltsstoffe;
c) Einbringen der ersten Zusammensetzung und der zweiten Zusammensetzung in eine wasserbasierte Lösung, die neben Wasser auch Verdickungsmittel und Geschmacksstoffe enthält, und Homogenisieren, wodurch eine Fleischersatzmasse erhalten wird, wobei die wasserbasierte Lösung, in die die erste und die zweite Zusammensetzung eingebracht werden, hergestellt wird, indem Wasser vorgelegt wird und das Verdickungsmittel und optionale weitere Inhaltsstoffe mit einer Temperatur von -9,0 bis -7,0°C zugeführt werden und homogenisiert wird, wodurch sich die wasserbasierte Lösung bildet, in die die erste und die zweite Zusammensetzung anschließend eingebracht werden, wobei zunächst die zweite Zusammensetzung und anschließend die erste Zusammensetzung in die wasserbasierte Lösung eingebracht werden, wobei nach dem Einbringen jeder der beiden Zusammensetzungen im Kutter homogenisiert wird bei 2.100-3.000 U/min, wobei durch das Homogenisieren nach dem Einbringen der ersten Zusammensetzung die Fleischersatzmasse erhalten wird;
d) Einbringen der Fleischersatzmasse in einen Darm;
e) Erhitzen der sich in dem Darm befindenden Fleischersatzmasse mittels heißen Wasserdampfs;
**dadurch gekennzeichnet, dass** die Temperatur der ersten Zusammensetzung während des Homogenisierens 0,0°C - 0,5°C beträgt und die Temperatur der zweiten Zusammensetzung während des Homogenisierens -2,0°C - 0,0°C beträgt, und der Anteil der ersten Zusammensetzung 27,0-33,0 Gew.-% bezogen auf das Gesamtgewicht der Fleischersatzmasse beträgt und der Anteil der zweiten Zusammensetzung 37,0-43,0 Gew.-% bezogen auf das Gesamtgewicht der Fleischersatzmasse beträgt.

2. Verfahren nach Anspruch 1, **dadurch gekennzeichnet, dass** das Homogenisieren der Inhaltsstoffe zum Erhalt der ersten Zusammensetzung in einem Kutter bei 2.500-3.000 U/min erfolgt und das Homogenisieren der Inhaltsstoffe zum Erhalt der zweiten Zusammensetzung in einem Kutter bei 2.000-3.000 U/min erfolgt, wobei der Kutter in beiden Fällen vorzugsweise ein Fassungsvermögen von 80-120 L aufweist.

3. Verfahren nach einem der voranstehenden Ansprüche, **dadurch gekennzeichnet, dass** das Verdickungsmittel ausgewählt ist aus Johannisbrotkernmehl, Xanthan, Konjakgummi, Carrageen, Guarkernmehl, Agar-Agar, Stärke, Reismehl und Mischungen dieser.

4. Verfahren nach einem der voranstehenden Ansprüche, **dadurch gekennzeichnet, dass** die Fleischersatzmasse dem Kutter bei einer Temperatur unterhalb von 0°C entnommen und in den Darm eingebracht wird.

5. Verfahren nach einem der voranstehenden Ansprüche, **dadurch gekennzeichnet, dass** der Darm, in den die Fleischersatzmasse eingebracht wird, ein Kunststoffdarm mit oder aus Polyamid ist.

6. Verfahren nach einem der voranstehenden Ansprüche, **dadurch gekennzeichnet, dass** das Erhitzen der sich in dem Darm befindenden Fleischersatzmasse mittels heißen Wasserdampfs bei einer Temperatur von 85-90°C erfolgt.

## Claims

1. Method for production of a meat substitute product, comprising the following steps:
a) Preparing a semi-solid or solid first composition by mixing and homogenizing 3-7% by weight of methylcellulose, 8-12% by weight of vegetable oil and 80-87% by weight of ice water, as well as optional further ingredients;
b) Preparing a semi-solid or solid second composition by mixing and homogenizing 5-15% by weight of pea protein isolate, 30-40% by weight of vegetable oil and 50-60% by weight of ice water, as well as optional further ingredients;
c) Introducing the first composition and the second composition into a water-based solution which, in addition to water, also contains a thickening agent and flavorings, and homogenizing, thereby obtaining a meat substitute mass, wherein the water-based solution into which the first and second compositions are introduced, is prepared by supplying water and adding the thickening agent and optional further ingredients at a temperature of -9.0 to -7.0°C and by homogenizing, thereby forming the water-based solution into which the first and second compositions are then introduced, wherein at first the second composition and after that the first composition is introduced into the water-based solution, wherein after each of the two compositions is introduced, it is homogenized in the cutter at 2,100-3,000 rpm, wherein through the homogenizing after addition of the first composition the meat substitute mass is obtained;
d) Introducing the meat substitute mass into a casing;
e) Heating the meat substitute mass contained in the casing by means of hot steam;
**characterized in that** the temperature of the first composition during homogenization is 0.0° - 0.5°C and the temperature of the second composition during homogenization is -2.0°C - 0.0°C, and the proportion of the first composition is 27.0-33.0% by weight based on the total weight of the meat substitute mass, and the proportion of the second composition is 37.0-43.0% by weight based on the total weight of the meat substitute mass.

2. Process according to claim 1, **characterized in that** the homogenization of the ingredients for obtaining the first composition takes place in a cutter at 2,500-3,000 rpm and the homogenization of the ingredients for obtaining the second composition is carried out in a cutter at 2,000-3,000 rpm, wherein the cutter in both cases preferably has a volumetric capacity of 80-120 L.

3. Process according to one of the preceding claims, **characterized in that** the thickening agent is selected from locust bean gum, xanthan gum, konjac gum, carrageenan, guar gum, agar-agar, starch, rice flour, and mixtures thereof.

4. Process according to one of the preceding claims, **characterized in that** the meat substitute mass is removed from the cutter at a temperature below 0°C and introduced into the casing.

5. Process according to one of the preceding claims, **characterized in that** the casing into which the meat substitute mass is introduced is a plastic casing comprising or consisting of polyamide.

6. Process according to one of the preceding claims, **characterized in that** the heating of the meat substitute mass contained in the casing is carried out by means of hot steam at a temperature of 85-90°C.

## Revendications

1. Procédé pour la production d'un produit de substitution de viande, comprenant les étapes suivantes :
a) préparation d'une première composition solide ou semi-solide par mélange et homogénéisation de 3 - 7 % en poids de méthylcellulose, 8 - 12 % en poids d'huile végétale et 80 - 87 % en poids d'eau glacée, ainsi que d'autres ingrédients optionnels ;
b) préparation d'une seconde composition solide ou semi-solide par mélange et homogénéisation de 5 - 15 % en poids d'isolat de protéines de pois, 30 - 40 % en poids d'huile végétale et 50 - 60 % en poids d'eau glacée, ainsi que d'autres ingrédients optionnels ;
c) introduction de la première composition et de la seconde composition dans une solution à base d'eau qui, outre de l'eau, contient également des épaississants et des agents aromatisants, et homogénéisation, ce par quoi une masse de substitut de viande est obtenue, la solution à base d'eau, dans laquelle sont introduites la première et la seconde composition, étant préparée en disposant au préalable de l'eau et en ajoutant l'épaississant et d'autres ingrédients optionnels à une température de -9,0 à -7,0 °C et en homogénéisant, ce par quoi se forme la solution à base d'eau, dans laquelle sont ensuite introduites la première et la seconde composition, en premier lieu la seconde composition et ensuite la première composition étant introduites dans la solution à base d'eau, après l'introduction de chacune des deux compositions l'homogénéisation étant effectuée dans le cutter à 2 100 - 3 000 tr/min, la masse de substitut de viande étant obtenue par l'homogénéisation après l'introduction de la première composition ;
d) introduction de la masse de substitution de viande dans un boyau ;
e) chauffage de la masse de substitut de viande se trouvant dans le boyau au moyen de vapeur d'eau chaude ;
**caractérisé en ce que** la température de la première composition pendant l'homogénéisation est de 0,0 °C - 0,5 °C et la température de la seconde composition pendant l'homogénéisation est de -2,0 °C - 0,0 °C, et la proportion de la première composition est de 27,0 - 33,0 % en poids par rapport au poids total de la masse de substitut de viande et la proportion de la seconde composition est de 37,0 - 43,0 % en poids par rapport au poids total de la masse de substitut de viande.

2. Procédé selon la revendication 1, **caractérisé en ce que** l'homogénéisation des ingrédients pour l'obtention de la première composition s'effectue dans un cutter à 2 500 - 3 000 tr/min et l'homogénéisation des ingrédients pour l'obtention de la seconde composition s'effectue dans un cutter à 2 000 - 3 000 tr/min, le cutter ayant dans les deux cas de préférence une capacité de 80 - 120 l.

3. Procédé selon l'une quelconque des revendications précédentes, **caractérisé en ce que** l'épaississant est choisi parmi la farine de graines de caroube, la gomme xanthane, la gomme konjac, le carraghénane, la farine de graines de guar, l'agar-agar, l'amidon, la farine de riz et des mélanges de ceux-ci.

4. Procédé selon l'une quelconque des revendications précédentes, **caractérisé en ce que** la masse de substitution de viande est retirée du cutter à une température inférieure à 0 °C et introduite dans le boyau.

5. Procédé selon l'une quelconque des revendications précédentes, **caractérisé en ce que** le boyau dans lequel est introduite la masse de substitution de viande est un boyau en matière synthétique comportant du ou constituée de polyamide.

6. Procédé selon l'une quelconque des revendications précédentes, **caractérisé en ce que** le chauffage de la masse de substitut de viande se trouvant dans le boyau s'effectue au moyen de vapeur d'eau chaude à une température de 85 - 90 °C.
